# EUROPEAN PATENT APPLICATION

(11) **EP 4 671 046 A1**
(43) Date of publication of application: **31.12.2025**
(21) Application number: 24185205.2
(22) Date of filing: 28.06.2024
(51) Int. Cl.: B60Q 3/43, B60Q 3/44, B60Q 3/51, B60Q 3/64, B60Q 3/74, B60Q 3/76, F21W 106/00

(54) **LAMP FOR AN AMBIENT LIGHT SYSTEM**

(71) Applicant: HELLA GmbH & Co. KGaA, 59552 Lippstadt (DE)
(72) Inventor: Cosa, Alexandru Viorel, 300724 Timisoara (RO); Hateg, Alex Daniel, 307125 Timisoara (RO); Marciuc, Adrian, 300778 Timisoara (RO); Pop, Daniel Marius, 437315 Maramures (RO); Toth Suru, Norbi, 300072 Timisoara (RO)
(74) Representative: Behr-Wenning, Gregor

(57) **Abstract**

The invention discloses a lamp (100) for an ambient light system or a spot lamp, in particular for an interior of a vehicle (200), comprising:
- a light source (10) configured for providing multicolor light along a longitudinal direction (z),
- a light guide (20) comprising an input (21) and an output (29), wherein the input (21) is connected to the light source (10) to receive the multicolor light, and
- a lens (30) which is connected to the output (29) of the light guide (20), wherein the lens (30) comprises a surface (31) for providing an illumination to an environment (E) of the lamp (100) at least along the longitudinal direction (z), wherein the surface (31) comprises at least two structures (32, 33) configured for light diffusion.

In addition, the invention discloses a vehicle (200) comprising at least one such lamp (100).

## Description

The present invention relates to a lamp with the features of the independent claim concerning a lamp and a vehicle with the features of the independent vehicle claim.

Lamps or lightning devices are known to provide ambient light systems or spotlights. These can for example be used for the interior of vehicles. Lamps therefore can provide different colors, e.g., by using multi-color and/or RGB light sources.

However, known lamps from the prior art have drawbacks. The intensity (distribution) of the light can be reduced and/or inhomogeneous, in particular with respect to a measurement plane perpendicular to a longitudinal direction (along the optical path). The directionality of such lamps is not optimized. When using multi-color light sources, different spectra and/or frequencies of the light source (e.g., the colors red, yellow, and/or blue) have an inhomogeneous distribution, in particular with respect to the measurement plane (see above). That means, that different areas for different colors can be formed, which may be undesired for illumination purposes, in particular if different colors are applicable (e.g., by the user/driver). In other words, the color mixing (of different colors) by the lamp is not optimized. This can lead to a rainbow effect and/or (visible) transition between colors (e.g., from red to green). This might also lead to undesired light patterns in the measurement plane. Known lamps can also be complicated to manufacture, they can be complex and/or expensive. In addition, a change regarding the optical properties (e.g., for different vehicles and/or distances) can necessitate a (complete) reengineering of the lamp.

Consequently, it may be one objective problem of the present invention to (at least partly) overcome at least one of the aforementioned disadvantages. In particular, it can be an objective to provide an improved lamp, preferably providing an improved intensity and/or homogeneity of the intensity distribution, color mixing, homogeneity of color distribution, costs, complexity and/or flexibility.

The above objective problem is solved by a lamp with the features of the independent patent claim concerning a lamp and by a vehicle with the features of the independent vehicle claim. Further features and details of the invention are shown in the dependent claims, the description and the drawings. Features and details which are described with respect to the disclosed lamp also apply to the disclosed vehicle and vice versa, so that reference is or can always be made mutually with regard to the disclosure of the individual aspects of the invention. In particular, features corresponding to the first aspect of the invention may also be part of the second aspect of the invention and vice versa.

According to a first aspect of the invention, the above objective problem is solved by a lamp for an ambient light system or a spot lamp, in particular for an interior of a vehicle (in particular according to the second aspect of the invention), comprising:
- a light source configured for providing multicolor light along a longitudinal direction,
- a light guide comprising an input and an output, wherein the input is connected to the light source to receive the multicolor light, and
- a lens which is connected to the output of the light guide, wherein the lens comprises a surface for providing an illumination to an environment of the lamp at least along the longitudinal direction, wherein the surface comprises at least two structures configured for light diffusion and/or scattering.

The lamp can be a lightning system configured for providing multicolor illumination, in particular for an interior of a vehicle, preferably a car, a truck or a bus. The lamp can be oriented along a longitudinal direction and/or optical path. For explanation, the longitudinal direction can be identical with a z-direction (up/down). In addition, an x-direction and/or an y-direction may be provided, which are perpendicular to each other and/or the longitudinal direction. Therefore a right-hand-system may be formed by the x-, y- and longitudinal direction (z-direction). Preferably, the lamp provides and/or produces light which is emitted at least along (parallel to) the longitudinal direction. In addition, the lamp can also produce light which is emitted at an angle to the longitudinal direction. Therefore, the lamp can be configured to provide a homogeneous intensity distribution, at least in a measurement plane perpendicular to the longitudinal direction (e.g., in a distance of 35 cm to the lamp/lens). The light intensity, intensity distribution and/or color mixing may be measured with a (suitable and/or multilayer) detector located in the measurement plane.

The light source is configured for providing multicolor light along the longitudinal direction. The light source can comprise one or more LED lights, for example providing different colors and/or multicolor light. Multicolor light can be provided by adjusting different intensities of different color channels, e.g. red, yellow, and/or blue. The light source can be oriented and/or parallel to the longitudinal direction. For example, a light output of the light source configured for emitting the light, is oriented along the longitudinal direction. The light source can be connected (e.g., by a data transmission line) to an electronic control unit configured for controlling the light source, in particular for adjusting the color(s) and/or intensity (e.g. by providing a certain amount of current and/or voltage). Preferably, a user and/or driver of the vehicle can adjust the (overall) intensity and/or color of the lamp via at least one input device, which may be connected to the electronic control unit.

The light guide comprises an input and an output, wherein the input can be mechanically and/or (preferably) optically connected to the light source to receive the multicolor light. An optical connection can comprise an intermediate medium configured for propagating light. An optical connection can preferably comprise an air gap between the input and the light source. This can facilitate the production process. The light guide can (primarily) be configured to provide (sufficient) color mixing, in particular along its length and/or by multiple (total) reflection of multicolor light inside. The input can therefore be in optical contact with the light source, such that light emitted by the light source can be coupled to the input of the light guide. The light guide can be configured for transporting light (due to total internal reflection), emitted in the input by the light source, to the output. The input and output may be oriented along the longitudinal direction. Therefore, the light can propagate and/or be transported by the light guide. Preferably, the inside of the light guide, in particular the inner surface, is configured for (multiple) total internal reflection of the (multicolor) light. Preferably, (all of) the light is emitted (only) via the output of the light guide and/or no light leakage occurs along the x- and/or y-direction. This may additionally be ensured by a bracket circumferentially enclosing the light guide (see below). A central region of the light guide may be positioned between the input and the output along the longitudinal direction. The light guide can comprise a long and/or longitudinal shape. The (outer) shape of the light guide can (approximately) be cylindrical and/or rod-shaped. For example, the light guide can comprise a circular input (top surface of a cylinder) and/or a circular output (bottom surface of a cylinder). The light guide is preferably configured for color mixing, in particular by providing reflection of light at the inner surface (lateral surface of the cylinder), wherein light from the input propagating inside the light guide can be reflected (multiple times) at the inner surface, whereby a different azimuthal direction is provided towards the output. This means that the light can be mixed and/or a color mixing can be performed. Color mixing can be improved by increasing the length of the light guide along the longitudinal direction. The light guide can comprise transparent polycarbonate (in particular Tarflon or another type of polycarbonate with higher transmittance) and/or or polymethyl methacrylate (PMMA, in particular PMMA 8N). The light guide can comprise a (constant) length (along the longitudinal direction) between 1 - 200 mm, in particular 5 - 100 mm, for example 10 - 80 mm, preferably 20 - 70 mm, ideally 25 - 50 mm. Therefore, a sufficient color mixing is provided while still providing a length suitable for incorporation in an interior of a vehicle. Preferably, the length is larger than 25 mm. The light guide can comprise a (variable) diameter (perpendicular to the longitudinal direction) between 1-20 mm, in particular 3 - 10 mm, for example 4-8 mm, preferably 5 - 7 mm, ideally 5.5 - 6 mm. Therefore, a sufficient (mechanical) stability can be provided while still saving costs and/or weight.

The lens can mechanically and/or optically be connected to the output of the light guide, for example by bonding and/or gluing. The lens can comprise a (constant) diameter (perpendicular to the longitudinal direction) between 2-60 mm, in particular 3 - 15 mm, for example 5-12 mm, preferably 6.5 - 10 mm, ideally 7.5 - 9 mm. A larger diameter can provide for improved intensity homogeneity, in particular close to the lens. A small diameter can provide a lower overall building size. Therefore, the lens and/or lamp can be arranged in comparably crowded places or niches. The diameter of the lens can also be increasing, in particular linearly increasing, for example starting from 5 to 8 m. This can provide improved shaping of the light towards the surroundings. Preferably, the output of the light guide is flat, which can provide an easy production. Alternatively, the output of the light guide may be curved, wherein a connecting surface of the lens has a complementary (curved) shape. This can facilitate the connection, fit and/or production process. The lens can be configured for receiving light propagating from the light guide. Preferably, (essentially) all the light emitted by the light source can be propagated through the light guide and then propagate through the lens, in particular before the light is emitted by a surface of the lens at least along the longitudinal direction. The lens comprises a surface for providing an illumination to an environment of the lamp at least along the longitudinal direction. The surface is preferably oriented perpendicular to the longitudinal direction and/or oriented away from the light source and/or light guide. Preferably, the surface essentially forms the outmost area and/or volume of the lamp along the longitudinal direction. Light emitted by the light source can (finally) be emitted via the surface into the (nearby) environment of the lamp and/or surface. Due to the geometrical shape and/or properties of the lens, an illumination can also (at least partly) be provided along the x- and/or y-direction. The surface comprises at least two (geometrical and/or three-dimensional and/or optical) structures configured for (improved) light diffusion and/or scattering of light. The at least two structures may have a different geometrical form compared to the rest of the surface (e.g., the remaining surface is flat and/or [constantly] curved). The at least two structures can be formed on the surface. It is also possible that the at least two structures form a part of the surface. Preferably, the at least two structures are convex with respect to the surface and/or the longitudinal direction. This can improve the light diffusion. For example, the structures can comprise (optical) pillows (see below). Alternatively, the at least two structures can comprise a pyramid, cuboid, and/or round shape. The at least two structures can be (primarily) configured for scattering of light, preferably without (or only limited) effect for different wavelengths of the (multicolor) light. It is also possible that the at least two structures (at least partly) form recesses and/or are concave. The size and/or area of the at least two structures can cover at least 20 %, in particular at least 40 %, for example at least 60 %, preferably at least 80 %, ideally at least 95%, optionally 100% of the surface. A small coverage can speed up manufacturing. A large coverage can provide for improved diffusion, intensity homogeneity and/or color mixing. The lens can comprise a length (along the longitudinal direction) between 0.1 - 50 mm, in particular 0.5 - 25 mm, for example 1 - 15 mm, preferably 2-8 mm, ideally 3 - 5 mm. Therefore, a sufficient diffusion and/or intensity homogenization is achieved. The lens can comprise polycarbonate (in particular Tarflon or another type of polycarbonate with higher transmittance) and/or or polymethyl methacrylate (PMMA, in particular PMMA 8N).

In the context of the present invention, it is possible that the at least two structures are symmetrical with respect to the longitudinal direction.

It is also possible that the at least two structures are arranged on (or in) at least two, three, four or five rings, wherein the longitudinal direction forms a symmetry axis and/or wherein structures of neighboring rings are arranged interleaved. Preferably, the at least two structures (all) have (essentially) the same size.

It can be provided that the at least two structures each comprise an optical pillow (or pillow lens).

An optical pillow can comprise a convex (extending along the longitudinal orientation), oval and/or round shape. Neighboring optical pillows can be separated by valleys. The optical pillows can provide an improved diffusion of the (multicolor) light. It may be particularly preferable to combine a curved (and/or convex) surface with optical pillows. This can lead to improved intensity homogenization and/or improved (overall) coverage.

It is also possible that the at least two structures comprise (between) 10 - 35 structures, in particular optical pillows. This allows for a comparably fast (and easy) production and an improved light diffusion and/or scattering. The size, diameter, and/or radius (if an approximately round shape is assumed) can comprise 0.1 - 10 mm, in particular 0.3 - 5 mm, preferably 0.5 - 2-5 mm, ideally 0.8 - 1.6 mm. Alternatively, it is also possible to provide micro pillows, in particular several hundreds, thousands or ten thousands. These can provide (further) improved diffusion and/or scattering. Preferably, the optical pillows can be manufactured with the lens in one piece, in particular by injection molding. Alternatively, the optical pillows can be produced by ablation, in particular laser ablation. It is also possible to produce optical pillows by etching.

It may be provided within the scope of the invention that the surface of the lens is curved.

Therefore, the at least two structures can be arranged on the curved surface. The lens might be cylindrical, wherein the surface pointing along the longitudinal direction is curved. A curved surface might (at least partly) comprise an oval and/or round shape. The surface can be symmetric with respect to the longitudinal direction. This can facilitate the production and/or provide improved illumination homogeneity and/or scattering of light.

In the context of the present invention, it is possible that the lens, in particular the at least two structures, comprise a texture, in particular a graining and/or grit.

This can mean, that a (the) surface of the at least two structures (itself) comprises a texture, graining and/or grit. A texture (or graining) can comprise ripples and/or protrusions, in particular perpendicular to the surface of the at least two structures. The texture, in particular single geometric elements of the texture, can comprise a round shape, pyramid shape, and/or cuboid shape (in particular for fast and/or easy production with a laser). For example, the texture can comprise a checkerboard structure with (separated) cuboids. Preferably, the size of the texture or graining (or single geometric elements of the graining) is small compared to the size of the at least two structures, for example at least one order of magnitude smaller, preferably at least two orders of magnitude smaller, ideally at least three orders of magnitude smaller. A suited and/or an optimal match of the sizes can be assessed by simulations, for example by optimization of the illumination homogeneity, color mixing and/or absence of artifacts (e.g., rainbow effect) in a measurement plane (e.g., 350 mm away from the lens). In other words, the at least two structures, preferably the optical pillows, comprise a (comparable small and/or fine) texture, in particular a graining, on their respective surface(s). This can optimize the light properties, in particular the light diffusion. In addition, this can (still) provide a comparably small size of the lens and/or fast production and/or reduced costs. The use of optical pillows can provide an improved (overall) light distribution (e.g., in a measurement plane). The use of optical pillows can potentially (slightly) lead to a rainbow effect, and/or altered (or reduced) color mixing. The texture (in addition) can further improve the light distribution and/or compensate for potential disadvantages. The texture can (additionally) be advantageous to reduce optical artifacts, in particular rainbow effects and/or insufficient color mixing. The inventors found out that a combination of optical pillows and a texture can provide an overall improved performance. Preferably, a combination of a curved surface (of the lens), optical pillows, and a texture can be used. This can further improved the aforementioned technical advantages. The texture can preferably be manufactured using a laser, in particular using laser ablation. Alternatively, etching might be used.

It can be provided that the light guide comprises a first diameter, and the lens comprises a second diameter with respect to the longitudinal direction, wherein the first diameter is smaller than the second diameter.

This can provide an improved scattering and/or spreading of (multicolor) light. Alternatively, the first diameter and the second diameter can be identical, which can provide a faster production and/or cheaper production and/or improved mechanical stability.

It is also possible that the light guide comprises a cross section (perpendicular to the longitudinal direction) with polygonal shape and at least five, preferably at least eight, edges.

This can mean that the shape of the cross section can have N edges, wherein N is preferably at least five, in particular at least (or exactly) eight. This can lead to improved and/or easier mounting (in particular within a bracket and/or housing, e.g., using latching noses and/or recesses). Preferably, the cross section is not (perfectly) round. Preferably, the cross section is symmetrical with respect to the longitudinal direction. This can provide a symmetrical optical behavior and/or properties (e.g., for propagating light). The polygonal shape can preferably be regular, in particular with equal angles and/or sides with respect to the (different) edges. This can provide an easy and/or cheap production. Consequently, the general (outer shape) of the light guide can be oriented along the longitudinal direction (comparable to a cylinder). The light guide may comprise a plurality of faces parallel to the longitudinal direction. Preferably, the cross section of the light guide is identical along the longitudinal direction.

In the context of the present invention, it is possible that the edges (of the cross section and/or polygonal shape) comprise a rounded shape; in particular each comprise a rounded shape along the longitudinal direction.

This can facilitate the mounting in a bracket (see below). This can also facilitate the production process. Furthermore, this can improve the color mixing (inside) of the light guide. Alternatively or in addition, the faces and/or sides of the light guide may comprise (elongated) ripples, a plurality of (elongate) ridges and/or valleys and/or sloping surfaces (there between), in particular along the longitudinal direction.

It can be provided that the light guide and the lens are designed as one single piece. This can improve the mechanical stability and/or improve the optical properties, in particular with reduced reflections.

It may be provided within the scope of the invention that the light guide and the lens are produced as injection molding parts, preferably in one single piece.

It is also possible that the light guide and the lens comprise an identical transparent material, in particular polycarbonate or polymethyl methacrylate.

This can speed up and/or facilitate the manufacturing process. This can also reduce the costs. Alternatively, the light guide and the lens comprise an identical transparent material with higher transmittance, in particular than polycarbonate or polymethyl methacrylate.

In the context of the present invention, it is possible that the lamp comprises a bracket configured for receiving the light source and light guide, and/or (at least partly) the lens.

Preferably the lens, in particular the outer circumference of the lens and/or surface (along the longitudinal direction), is arranged flush with the bracket. This improves the mechanical stability, in particular when the bracket and/or lamp are mounted. Preferably, the bracket can be configured to receive different light guides and/or lenses, in particular with different sizes. This means that the bracket and/or light source can be generally used, while in particular the light guide and/or lens can be adjusted for specific purpose. This can reduce the (overall) manufacturing costs. Preferably, the bracket comprises a complimentary form with respect to the light source, light guide and/or lens.

It can be provided that the light guide comprises at least one, preferably at least two, latching noses, wherein preferably the latching noses are configured for engagement with at least one, preferably at least two, latching recesses in the bracket.

This can provide an easy, detachable and/or robust mounting of the light guide inside of the bracket. Preferably, in this way, the light source can also be attached and/or blocked in the bracket. The latching recesses can be shaped as counter latching noses. Preferably, the latching noses and latching recesses comprise a complementary shape.

It is also possible that the input of the light guide comprises at least one collimator for connecting the light source to the input of the light guide.

This can lead to improved coupling of the light, in particular different colors of the light. This can also facilitate the mounting.

According to a second aspect of the invention, the above objective problem is solved by a vehicle comprising at least one lamp according to the first aspect.

This means that the same technical advantages may be realized with respect to the vehicle according to the second aspect, which have already been described above for the lamp according to the first aspect of the invention.

Additional technical features, advantages and details of the invention are disclosed by the following description of the figures. The figures provide a detailed description of possible embodiments of the present invention. Therefore, the features described by the claims and the description can be realized alone or in (any) combination. The following exemplary description includes:
- Fig. 1: a lamp,
- Fig. 2: a lamp,
- Fig. 3: a lamp and
- Fig. 4: a vehicle.

In the following figures, identical reference signs are used for identical (or corresponding) features, in particular for different embodiments of the invention.

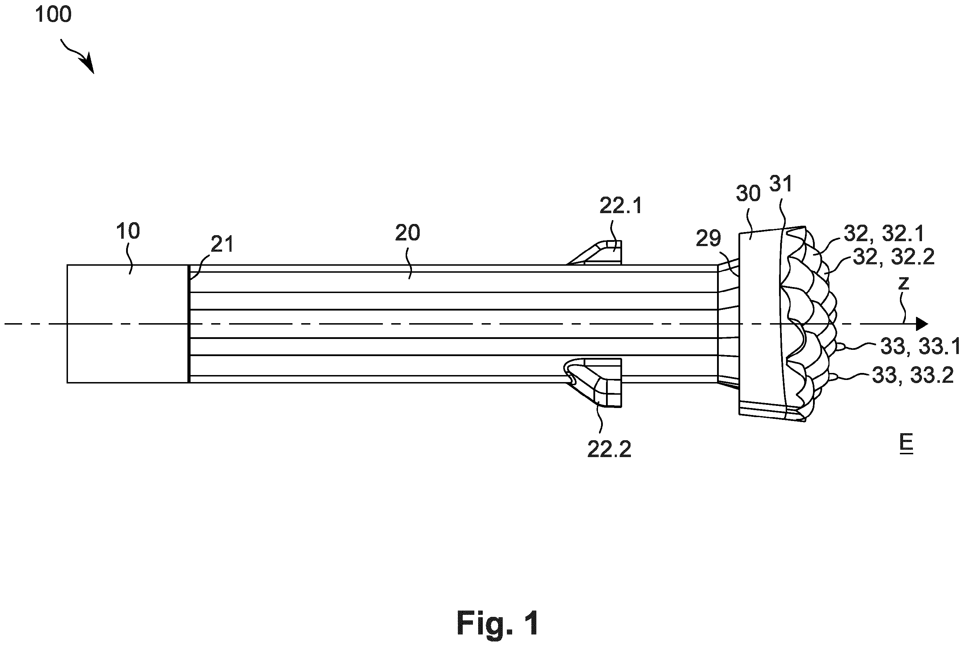

Fig. 1 shows a lamp 100 oriented along a longitudinal direction z. The lamp 100 can be for an ambient light system or a spot lamp, in particular for an interior of a vehicle 200, and comprises:
- a light source 10 configured for providing multicolor light along a longitudinal direction z,
- a light guide 20 comprising an input 21 and an output 29, wherein the input 21 is connected to the light source 10 to receive the multicolor light, and
- a lens 30 which is connected to the output 29 of the light guide 20, wherein the lens 30 comprises a surface 31 for providing an illumination to an environment E of the lamp 100 at least along the longitudinal direction z, wherein the surface 31 comprises at least two structures 32, 33 configured for light diffusion.

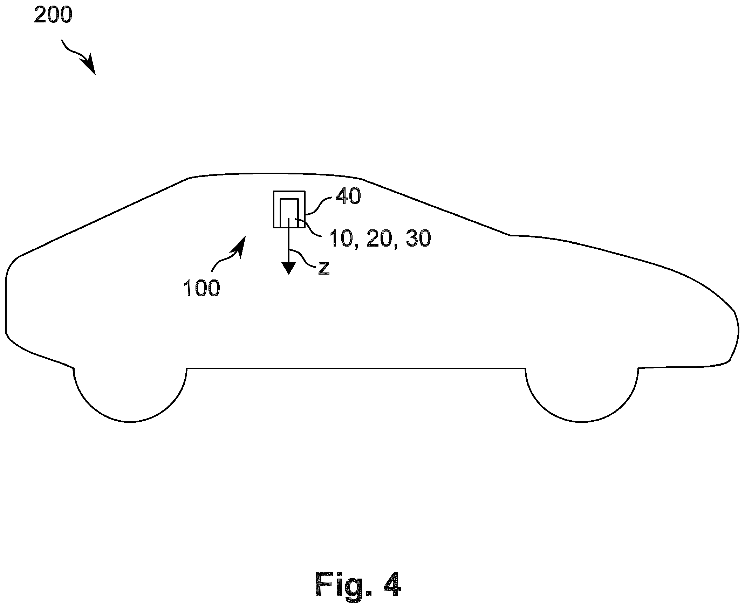

The at least two structures 32, 33 comprise an optical pillow 32.1, 32.2, arranged on a (curved) surface 31 of the lens 30. In addition, the lens 30, in particular the at least two structures 32, 33, comprise a texture 33.1, 33.2, in particular a graining 33.1, 33.2. In combination, preferable light properties and/or illumination can be provided at least along the longitudinal direction z and/or perpendicular to the longitudinal direction z. In addition, the light guide 20 comprises at least one, preferably at least two, latching noses 22.1, 22.2, wherein preferably the latching noses 22.1, 22.2 are configured for engagement with at least one, preferably at least two, latching recesses in a bracket 40 (not shown, see fig. 4).

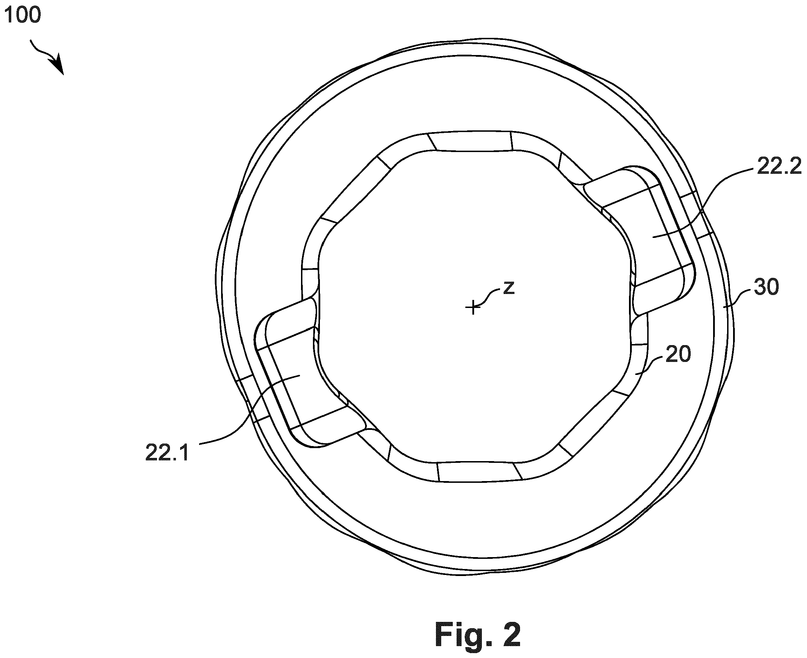

Fig. 2 shows a view along the longitudinal direction z, wherein the lens 30 is located at the bottom (compare to fig. 1 for order). Here, the light guide 20 is located above the lens 30 and particularly comprises a smaller diameter. The light guide 20 comprises two latching noses 22.1, 22.2, which are oriented symmetrical with respect to the longitudinal direction z.

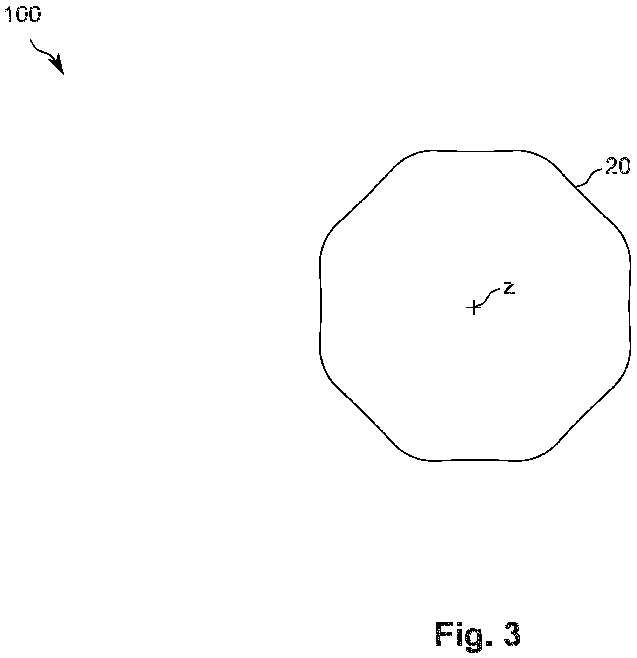

Fig. 3, in particular with respect to fig. 2, shows the outer circumference of the light guide 20 (only). The longitudinal direction z is oriented perpendicular to (pointing inside of) the drawing plane.

Fig. 4 shows a vehicle 200 comprising at least one lamp 100 for providing an illumination for the interior of the vehicle, at least along a longitudinal direction z. The lamp 100 comprises a bracket 40 comprising the light source 10, the light guide 20, and/or the lens 30.

### List of reference signs

- 10: light source
- 20: light guide
- 21: Input
- 22.1, 22.2: latching noses
- 29: output
- 30: lens
- 31: surface
- 32, 33: structures
- 32.1, 32.2: optical pillows
- 33.1, 33.2: texture, graining
- 40: bracket
- 100: lamp
- 200: vehicle
- E: environment
- z: direction

## Claims

1. Lamp (100) for an ambient light system or a spot lamp, in particular for an interior of a vehicle (200), comprising:
- a light source (10) configured for providing multicolor light along a longitudinal direction (z),
- a light guide (20) comprising an input (21) and an output (29), wherein the input (21) is connected to the light source (10) to receive the multicolor light, and
- a lens (30) which is connected to the output (29) of the light guide (20), wherein the lens (30) comprises a surface (31) for providing an illumination to an environment (E) of the lamp (100) at least along the longitudinal direction (z), wherein the surface (31) comprises at least two structures (32, 33) configured for light diffusion.

2. Lamp (100) according to claim 1,
**characterized in that**,
the at least two structures (32, 33) are symmetrical with respect to the longitudinal direction (z).

3. Lamp (100) according to claim 1 or 2,
**characterized in that**,
the at least two structures (32, 33) each comprise an optical pillow (32.1, 32.2).

4. Lamp (100) according to any one of the preceding claims,
**characterized in that**,
the at least two structures (32, 33) comprise between
10 - 35 structures (32, 33), in particular optical pillows (32.1, 32,2).

5. Lamp (100) according to any one of the preceding claims,
**characterized in that**,
the surface (31) of the lens (30) is curved.

6. Lamp (100) according to any one of the preceding claims,
**characterized in that**,
the lens (30), in particular the at least two structures (32, 33), comprise a texture (33.1, 33.2), in particular a graining (33.1, 33.2).

7. Lamp (100) according to any one of the preceding claims,
**characterized in that**,
the light guide (20) comprises a first diameter, and the lens (30) comprises a second diameter with respect to the longitudinal direction (z), wherein the first diameter is smaller than the second diameter.

8. Lamp (100) according to any one of the preceding claims,
**characterized in that**,
the light guide (20) comprises a cross section with polygonal shape and at least five, preferably at least eight, edges.

9. Lamp (100) according to claim 8,
**characterized in that**,
the edges comprise a rounded shape.

10. Lamp (100) according to any one of the preceding claims,
**characterized in that**,
the light guide (20) and the lens (30) are produced as injection molding parts, preferably in one single piece.

11. Lamp (100) according to any one of the preceding claims,
**characterized in that**,
the light guide (20) and the lens (30) comprise an identical transparent material, in particular polycarbonate or polymethyl methacrylate.

12. Lamp (100) according to any one of the preceding claims,
**characterized in that**,
the lamp (100) comprises a bracket (40) configured for receiving the light source (10) and light guide (20).

13. Lamp (100) according to any one of the preceding claims,
**characterized in that**,
the light guide (20) comprises at least one, preferably at least two, latching noses (22.1, 22.2), wherein preferably the latching noses (22.1, 22.2) are configured for engagement with at least one, preferably at least two, latching recesses in the bracket (40).

14. Lamp (100) according to any one of the preceding claims,
**characterized in that**,
the input (21) of the light guide (20) comprises at least one collimator for connecting the light source (10) to the input (21) of the light guide (20).

15. Vehicle (200) comprising at least one lamp (100) according to any one of the preceding claims.
